# EUROPEAN PATENT SPECIFICATION

(11) **EP 4 124 471 B1**
(45) Date of publication and mention of the grant of the patent: **01.01.2025**
(21) Application number: 22182948.4
(22) Date of filing: 05.07.2022
(51) Int. Cl.: B60C 9/00, B60C 9/20, B60C 9/22

(54) **TIRE**
REIFEN
PNEUMATIQUE

(30) Priority: 27.07.2021 JP 2021122720
(43) Date of publication of application: 01.02.2023
(73) Proprietor: Sumitomo Rubber Industries, Ltd., Kobe-shi, Hyogo-ken 651-0072 (JP)
(72) Inventor: SUZUKI, Masumi, Kobe-shi, Hyogo, 651-0072 (JP); MIKI, Takashi, Kobe-shi, 651-0072 (JP); MIAO, Dong, Kobe-shi, Hyogo, 651-0072 (JP); MISAKI, Momoka, Kobe-shi, 651-0072 (JP); MISEKI, YUTA, Kobe-shi, 651-0072 (JP)
(74) Representative: Manitz Finsterwald Patent- und Rechtsanwaltspartnerschaft mbB

(56) References cited:
- JP-A- 2015 080 972
- US-A1- 2018 022 159
- US-A1- 2018 022 160

## Description

### BACKGROUND OF THE INVENTION

### Field of the Invention

The present invention relates to a tire having a belt layer and a band layer.

### Background Art

To date, a tire having a belt layer and a band layer disposed inward of a tread portion in the tire radial direction has been known. For example, Japanese Laid-Open Patent Publication No. 2019-177838 suggests a tire in which a belt formed of two or more layers includes cords, and a gauge between the cords of the two adjacent layers is specified to allow achievement of both noise performance and fuel economy.

However, in recent years, the tire disclosed in Japanese Laid-Open Patent Publication No. 2019-177838 has also been required to exhibit further improved durability and ride comfort during high-speed running according to enhancement of vehicle performance and development of infrastructures such as expressways. Related technologies are also known from US 2018/022159 A1, US 2018/022160 A1, and JP 2015 080972 A.

The present invention has been made in view of the aforementioned circumstances, and a main object of the present invention is to provide a tire that can achieve both durability and ride comfort during high-speed running.

### SUMMARY OF THE INVENTION

The present invention is directed to a tire including a belt layer and a band layer, as set out by the appended claims. The belt layer includes at least one belt ply. The belt ply includes a belt cord formed of a single steel cord. The band layer includes at least one band ply. The band ply includes a band cord disposed at an angle of not greater than 5° relative to a tire circumferential direction. A gauge representing a distance in a tire radial direction between a surface of the belt cord of the belt ply and a surface, of the band cord of the band ply, adjacent to the surface of the belt cord in the tire radial direction, is 0.1 to 0.3 mm. A value obtained by dividing a sum of a diameter (mm), in the tire radial direction, of the belt cord and a diameter (mm), in the tire radial direction, of the band cord by the gauge (mm) is 4.0 to 13.0.

The tire of the present invention has the belt layer and the band layer having such structures and thus can allow achievement of both durability and ride comfort during high-speed running.

### BRIEF DESCRIPTION OF THE DRAWINGS

FIG. 1 is a cross-sectional view of a tire according to one embodiment of the present invention;
FIG. 2 is a cross-sectional view of a belt layer and a band layer according to the present embodiment;
FIG. 3 is a cross-sectional view of a belt layer and a band layer according to another embodiment; and
FIG. 4 is a schematic diagram illustrating a belt cord.

### DETAILED DESCRIPTION

An embodiment of the present invention will be described below in detail with reference to the drawings.

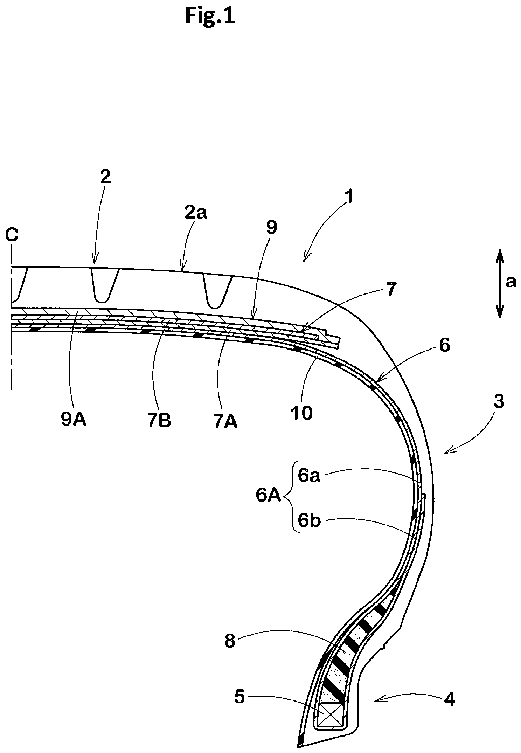

FIG. 1 is a tire meridian cross-sectional view, including a rotation axis in a normal state, of a tire 1 of the present embodiment. The "normal state" represents a state where, in a case where the tire 1 is a pneumatic tire, the tire 1 is mounted on a normal rim and is adjusted to have a normal internal pressure, and no load is applied to the tire. Hereinafter, unless otherwise specified, dimensions and the like of the components of the tire 1 are represented by values measured in the normal state.

When a standard system including a standard on which the tire 1 is based is provided, the "normal rim" represents a rim that is defined for each tire by the standard, and is, for example, "standard rim" in the JATMA standard, "Design Rim" in the TRA standard, or "Measuring Rim" in the ETRTO standard. When a standard system including a standard on which the tire 1 is based is not provided, the "normal rim" represents a rim having the smallest rim width in rims on which the tire can be mounted, and which do not cause air leakage and have the smallest rim diameter.

When a standard system including a standard on which the tire 1 is based is provided, the "normal internal pressure" represents an air pressure that is defined for each tire by the standard, and is "maximum air pressure" in the JATMA standard, the maximum value recited in the table "TIRE LOAD LIMITS AT VARIOUS COLD INFLATION PRESSURES" in the TRA standard, or "INFLATION PRESSURE" in the ETRTO standard. When a standard system including a standard on which the tire 1 is based is not provided, the "normal internal pressure" is 250 kPa for tires for passenger cars.

The tire 1 of the present embodiment is preferably used as a tire for a passenger car. In the description herein, the tire for a passenger car represents a pneumatic rubber tire which is produced on the assumption that the tire is mounted to a four-wheel traveling automobile and for which the normal load is not higher than 1000 kg.

The tire for a passenger car is not particularly limited as long as the normal load is not higher than 1000 kg. However, from the viewpoint of reducing excessive deformation at a tread portion, the tire for a passenger car is preferably applied to a tire for which the normal load is 900 kg, more preferably applied to a tire for which the normal load is 750 kg, and even more preferably applied to a tire for which the normal load is 700 kg.

The "normal load" represents a load that is defined by a standard, in a standard system including the standard on which the tire 1 is based, for each tire, and is the "maximum load capacity" in the JATMA standard, the maximum value recited in the table "TIRE LOAD LIMITS AT VARIOUS COLD INFLATION PRESSURES" in the TRA standard, or the "LOAD CAPACITY" in the ETRTO standard.

The tire 1 is not limited to a tire for a passenger car, and can be applied to, for example, a heavy-duty tire, a tire for a motorcycle, a tire for a racing vehicle, and the like. The tire 1 having a belt layer 7 and a band layer 9 described below can be applied to various tires including, for example, non-pneumatic tires the insides of which are not filled with pressurized air.

As shown in FIG. 1, the tire 1 of the present embodiment includes an annularly extending tread portion 2, a pair of sidewall portions 3 extending on both sides of the tread portion 2, and a pair of bead portions 4 extending so as to be continuous with the sidewall portions 3. The tire 1 of the present embodiment has a toroidal carcass 6 extending on and between bead cores 5 of the pair of bead portions 4, and the belt layer 7 disposed tire-radially outward of the carcass 6 and inward of the tread portion 2 in a tire radial direction a.

In the tread portion 2, for example, an outer surface 2a forms a ground contact surface that comes into contact with a road surface during running. The profile of the outer surface 2a of the tread portion 2 is formed by, for example, a single arc or a combination of arcs having a plurality of curvatures on the tire meridian cross-section.

The tread portion 2 preferably includes an elastomer layer having at least one layer. For example, the tread portion 2 may have two or more layers of the elastomer layer stacked in the tire radial direction a, or may have a plurality of elastomer layers disposed in the tire axial direction.

In the elastomer layer of the tread portion 2, for example, circumferential grooves extending in the tire circumferential direction, lateral grooves extending in the tire axial direction, sipes each having a groove width of not greater than 2 mm, and the like may be disposed as appropriate. Examples of the circumferential grooves include grooves that linearly extend and grooves extending so as to zigzag.

The elastomer layer of the tread portion 2 is formed of, for example, isoprene-based rubber such as natural rubber and isoprene rubber, diene-based rubber such as butadiene rubber, styrene-butadiene rubber, styrene-isoprene-butadiene rubber, chloroprene rubber, acrylonitrile butadiene rubber, and isobutylene-isoprene-rubber, or a thermoplastic elastomer such as styrene-butadiene block copolymers and styrene-isoprene-styrene copolymers. Among them, the diene-based rubber is preferably used for the elastomer layer of the tread portion 2.

The sidewall portion 3 preferably includes an elastomer layer having at least one layer. In the sidewall portion 3, for example, two or more layers of the elastomer layer may be stacked in the tire axial direction, or a plurality of the elastomer layers may be disposed in the tire radial direction a. The elastomer layer of the sidewall portion 3 may be, for example, formed of the same component as that of the elastomer layer of the tread portion 2 or may be formed of a different component.

A boundary face between the elastomer layer of the tread portion 2 and the elastomer layer of the sidewall portion 3 is, for example, formed such that the tire-axially outer end is disposed outward of the tire-axially inner end in the tire radial direction a. The boundary face between the elastomer layer of the tread portion 2 and the elastomer layer of the sidewall portion 3 may be, for example, formed such that the tire-axially outer end is disposed inward of the tire-axially inner end in the tire radial direction a.

The carcass 6 includes at least one carcass ply 6A. In the present embodiment, the carcass 6 includes one carcass ply 6A. The carcass ply 6A is formed of, for example, an elastomer layer including a carcass cord (not shown) disposed at an angle of 75° to 90° relative to the tire circumferential direction. As the carcass cord, for example, an organic fiber cord formed of aromatic polyamide (aramid), rayon, polyester, or the like can be adopted. In the description herein, "A to B" represents "not less than A and not greater than B".

The carcass ply 6A includes, for example, a body portion 6a extending from the tread portion 2 through the sidewall portions 3 to the bead cores 5 of the bead portions 4, and turned-up portions 6b that are continuous with the body portion 6a and are turned up around the bead cores 5 from the inner side toward the outer side in the tire axial direction. For example, an outer end of the turned-up portion 6b in the tire radial direction may extend to the belt layer 7. For example, a bead apex 8 is disposed between the body portion 6a and each turned-up portion 6b of the carcass ply 6A so as to extend outwardly from the bead core 5 in the tire radial direction. The bead apex 8 is formed of, for example, an elastomer layer.

In the bead portions 4, for example, bead reinforcing layers (not shown) may be disposed outward of the turned-up portions 6b of the carcass 6 in the tire axial direction. The bead reinforcing layer may be formed of, for example, an elastomer layer having the same component as that of the bead apex 8, or may be formed of an elastomer layer having a different component.

In the bead portions 4, for example, chafers (not shown) may be disposed outward of the turned-up portions 6b of the carcass 6 in the tire axial direction. In a case where the bead reinforcing layer and the chafer are disposed, the chafer is preferably disposed outward of the bead reinforcing layer in the tire axial direction.

The tire 1 of the present embodiment has an inner liner 10 disposed inward of the carcass 6. The inner liner 10 is preferably formed of an air-impermeable elastomer layer. The elastomer layer of the inner liner 10 is formed of, for example, isobutylene-isoprene-rubber or halogenated isobutylene-isoprene-rubber. The inner liner 10 having such a structure can maintain air pressure to which the tire 1 is inflated.

The belt layer 7 includes at least one belt ply and preferably includes two or more belt plies. In the present embodiment, the belt layer 7 includes two belt plies 7A, 7B. The two belt plies 7A, 7B include, for example, a first belt ply 7A disposed on the inner side in the tire radial direction, and a second belt ply 7B disposed outward of the first belt ply 7A. The belt layer 7 having such a structure enhances stiffness of the tread portion 2 and can enhance durability of the tire 1 during high-speed running

The tire 1 has a band layer 9 that is disposed inward of the tread portion 2 in the tire radial direction a and that includes at least one band ply, and, in the present embodiment, the band layer 9 includes one band ply 9A. The band layer 9 having such a structure contributes to achieving both durability of the tire 1 and ride comfort exhibited by the tire 1 during high-speed running. This is because the band ply 9A is expected to enhance holdability of the tread portion 2, and thus reduce deformation of the tread portion 2 and inhibit heat generation during high-speed running.

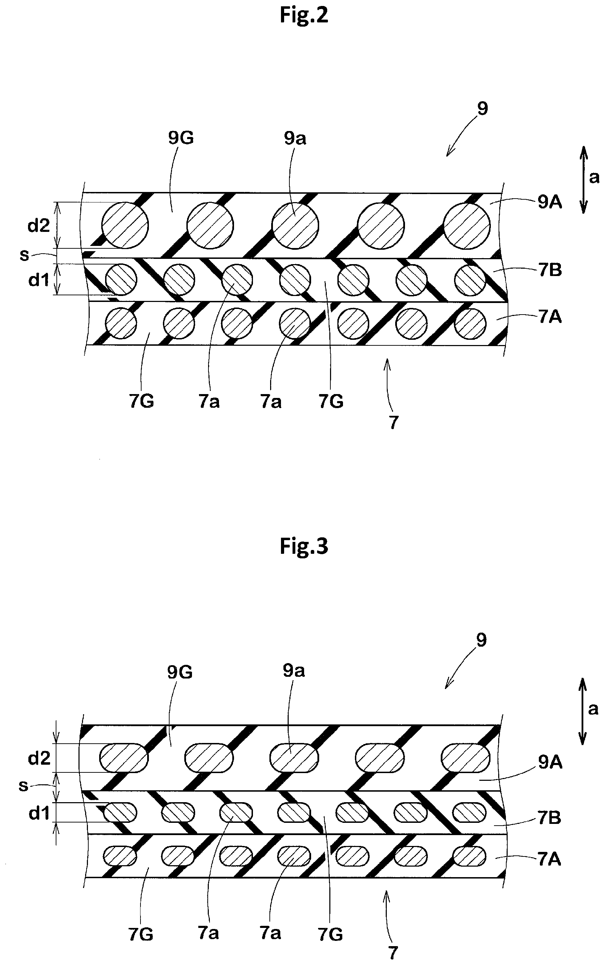

FIG. 2 is a cross-sectional view of the belt layer 7 and the band layer 9 according to the present embodiment. FIG. 3 is a cross-sectional view of the belt layer 7 and the band layer 9 according to another embodiment. As shown in FIG. 2 and FIG. 3, in the present embodiment, the belt plies 7A and 7B of the belt layer 7 each include a belt cord 7a formed of a single steel cord and an elastomer composition 7G for covering the belt cord 7a.

The belt layer 7 having such a structure contributes to achieving both durability of the tire 1 and ride comfort exhibited by the tire 1 during high-speed running. This is because the belt cord 7a is formed of a single steel cord, and the belt cord 7a is not easily extended even when the diameter in the tire radial direction is reduced to lighten the weight, so that it is expected that the shape of the tread portion 2 is stabilized and heat generation is inhibited during high-speed running.

In the present embodiment, the elastomer composition 7G of the belt plies 7A and 7B exhibits rubber elasticity. Examples of the elastomer composition 7G include a rubber composition and a thermoplastic elastomer composition. In a case where the elastomer composition 7G is a rubber composition, examples of the rubber component include isoprene-based rubber, butadiene-based rubber, styrene-butadiene rubber, nitrile rubber, and isobutylene-isoprene-rubber. In a case where the elastomer composition 7G is a thermoplastic elastomer composition, examples of the elastomer include thermoplastic polyurethane, and block copolymers such as styrene-butadiene block copolymers and styrene-ethylene-butylene-styrene block copolymers.

In the present embodiment, the belt cord 7a is a plated or ternary alloy-plated one. As the plating treatment, for example, plating treatment using zinc, copper, and the like can be performed. As the ternary alloy-plating treatment, for example, ternary alloy-plating treatment using zinc, copper, cobalt, and the like can be performed.

The belt cord 7a having such a structure has good adhesiveness to the elastomer composition 7G, and the belt cord 7a and the elastomer composition 7G can cooperate to generate a stress also during high-speed running, and durability of the tire 1 during high-speed running can be enhanced.

The belt cord 7a is, for example, disposed at an angle of 10 to 30° relative to the tire circumferential direction. The belt cord 7a of the first belt ply 7A and the belt cord 7a of the second belt ply 7B are preferably inclined at the same angle in the opposite directions relative to the tire circumferential direction. The angle of the belt cord 7a represents an angle in the tire 1 in the normal state, and can be confirmed by, for example, partially peeling the tread portion 2. The belt layer 7 having such a structure enhances stiffness of the tread portion 2 in a well-balanced manner, and can enhance durability of the tire 1 during high-speed running.

In the present embodiment, the band ply 9A includes a band cord 9a disposed at an angle of not greater than 5° relative to the tire circumferential direction and an elastomer composition 9G for covering the band cord 9a. The angle of the band cord 9a represents an angle in the tire 1 in the normal state, and can be confirmed by, for example, partially peeling the tread portion 2.

The elastomer composition 9G of the band ply 9A preferably exhibits rubber elasticity like the elastomer composition 7G of the belt plies 7A, 7B. For example, the elastomer composition 9G may be the same as the elastomer composition 7G.

In the present embodiment, a gauge s representing a distance in the tire radial direction between a surface of the belt cord 7a of the belt ply 7B and the surface, of the band cord 9a of the band ply 9A, adjacent to the surface of the belt cord 7a in the tire radial direction, is 0.1 to 0.3 mm.

In the belt ply 7B and the band ply 9A having such structures, the gauge s between the belt cord 7a and the band cord 9a is small, so that a centrifugal force acting on the tread portion 2 during high-speed running can be reduced, and durability of the tire 1 during high-speed running can be enhanced. This may be because a centrifugal force acting on the tread portion 2 can be reduced, and deformation of the tread portion 2 is reduced, and, consequently, heat generation is inhibited.

In the present embodiment, a value ((d1+d2)/s) obtained by dividing a sum (d1+d2) of a diameter d1 (mm), in the tire radial direction a, of the belt cord 7a and a diameter d2 (mm), in the tire radial direction a, of the band cord 9a by the gauge s (mm), is 4.0 to 13.0.

The belt ply 7B and the band ply 9A having such structures can inhibit degradation of ride comfort exhibited by the tire 1 during high-speed running. This may be because, in a case where the gauge s between the belt cord 7a and the band cord 9a is small, the sum (d1+d2) of the diameter d1 of the belt cord 7a and the diameter d2 of the band cord 9a is also decreased. Thus, in the present embodiment, both durability of the tire 1 and ride comfort exhibited by the tire 1 during high-speed running, can be achieved.

The mechanism for allowing the effect of the present embodiment to be exhibited may be as follows, but is not necessarily intended to be limited to the following theory.

That is, in the tire 1 of the present embodiment, the belt cord 7a is formed of a single steel cord. Thus, in the present embodiment, it is considered that the cord outer diameter can be reduced as compared with a twisted cord, and the weight of the tire 1 can be reduced. The weight reduction of the tire 1 contributes to enhancement of fuel economy performance.

However, the single steel cord is an untwisted cord, and, thus, an area of the single steel cord which is in contact with rubber is smaller than that of a twisted cord, and a holding force in the tire radial direction tends to become low in general. In a case where a holding force of the belt cord 7a is low, for example, a so-called outer diameter growth in which the outer diameter is increased by a centrifugal force generated during high-speed running occurs, and deformation of the tread portion 2 is also increased according to the outer diameter growth, and heat generation may be increased. In this case, the tread portion 2 is drawn to be thin according to the outer diameter growth, so that durability of the tire 1 during high-speed running may be lowered.

Therefore, in the tire 1 of the present embodiment, the gauge s between the belt cord 7a and the band cord 9a is specified so as to be small, whereby it is expected that a centrifugal force acting on the tread portion 2 is reduced, and deformation of the tread portion 2 is reduced, and, furthermore, heat generation is inhibited. Thus, the tire 1 of the present embodiment is considered to enhance durability during high-speed running.

Meanwhile, in a case where the gauge s between the belt cord 7a and the band cord 9a is small, cushioning properties of the tread portion 2 are reduced, and ride comfort exhibited by the tire 1 tends to be degraded in general. In the tire 1 of the present embodiment, by specifying the value ((d1+d2)/s) in a specific range, the sum (d1+d2) is also decreased in a case where the gauge s is small. Therefore, stiffness of the tread portion 2 in the tire radial direction can be appropriately reduced. Thus, the tire 1 of the present embodiment is considered to achieve ride comfort during high-speed running while enhancing durability during high-speed running.

In the tire 1 of the present embodiment, in a case where a great value is adopted as the gauge s in a specific range, the sum (d1+d2) is also increased, so that it is considered that holdability of the tread portion 2 is enhanced and overall performance of ride comfort and durability during high-speed running can be enhanced.

In FIG. 2, the belt cord 7a and the band cord 9a each have a round cross-section. In FIG. 3, the belt cord 7a and the band cord 9a each have a flattened cross-section. In the description therein, the round means that a ratio between a major axis and a minor axis on the cross-section is less than 1.05. The flattened means that a ratio between a major axis and a minor axis on the cross-section is not less than 1.05.

The diameter d1, in the tire radial direction a, of the belt cord 7a represents, for example, a diameter of a cross section, for the belt cord 7a having a round cross-section as shown in FIG. 2. Meanwhile, the diameter d1, in the tire radial direction a, of the belt cord 7a represents a dimension along the tire radial direction a, for the belt cord 7a having a flattened cross-section as shown in FIG. 3.

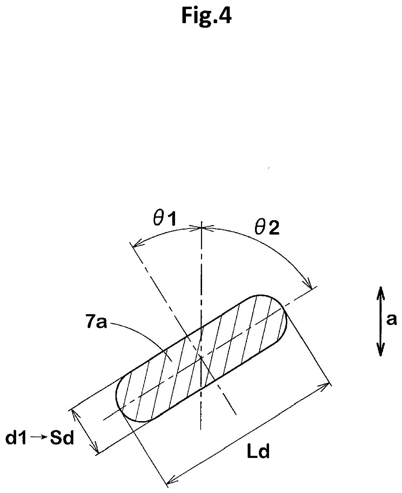

FIG. 4 is a schematic diagram illustrating the belt cord 7a. As shown in FIG. 4, in a case where the belt cord 7a having a flattened cross-section is inclined relative to the tire radial direction a, one axis, of the minor axis Sd and the major axis Ld of the belt cord 7a having the flattened cross-section, having a smaller angle relative to the tire radial direction a is defined as the diameter d1 in the tire radial direction a. In FIG. 4, an angle θ1 of the minor axis Sd direction relative to the tire radial direction a is less than an angle θ2 of the major axis Ld direction relative thereto, and, therefore, the minor axis Sd is defined as the diameter d1 in the tire radial direction a.

The diameter d2, in the tire radial direction a, of the band cord 9a represents, for example, a diameter of the cross-section, for the band cord 9a having a round cross-section as shown in FIG. 2. The diameter d2, in the tire radial direction a, of the band cord 9a represents, for example, a dimension along the tire radial direction a, for the band cord 9a having a flattened cross-section as shown in FIG. 3.

In a case where the band cord 9a having a flattened cross-section is inclined relative to the tire radial direction a, one axis, of the minor axis and the major axis of the band cord 9a having the flattened cross-section, having a smaller angle relative to the tire radial direction a is defined as the diameter d2 in the tire radial direction a (refer to FIG. 4), which is not shown.

As shown in FIG. 2 and FIG. 3, the diameter d1, in the tire radial direction a, of the belt cord 7a is preferably 0.16 to 0.42 mm. The belt cord 7a having such a structure can reduce a centrifugal force acting on the tread portion 2 during high-speed running since the diameter d1, in the tire radial direction a, of the belt cord 7a is small, and can allow achievement of both durability of the tire 1 and ride comfort exhibited by the tire 1 during high-speed running.

When the diameter d1 of the belt cord 7a is not less than 0.16 mm, a holding force of the tread portion 2 can be enhanced, and durability of the tire 1 during high-speed running can be enhanced. From such a viewpoint, the diameter d1 of the belt cord 7a is more preferably not less than 0.20 mm and even more preferably not less than 0.23 mm.

When the diameter d1 of the belt cord 7a is not greater than 0.42 mm, enhancement of bending stiffness is inhibited, and ride comfort exhibited by the tire 1 during high-speed running can be enhanced. From such a viewpoint, the diameter d1 of the belt cord 7a is more preferably not greater than 0.38 mm and even more preferably not greater than 0.35 mm.

Preferably, 50 to 200 belt cords 7a are arranged per ply width of 5 cm in each of the belt plies 7A, 7B. The number n1 of the belt cords 7a arranged per ply width of 5 cm represents the number of the belt cords 7a arranged per ply width of 5 cm in the direction orthogonal to the longitudinal direction of the belt cord 7a. The number n1 of the arranged belt cords 7a can be, for example, obtained by measurement in a range of the belt ply 7A, 7B including the tire equator C.

When the number n1 of the belt cords 7a arranged per ply width of 5 cm is not less than 50, stiffness of the tread portion 2 in the tire axial direction can be enhanced, and durability of the tire 1 during high-speed running can be enhanced. From such a viewpoint, the number n1 of the arranged the belt cords 7a is more preferably not less than 60 and even more preferably not less than 70.

When the number n1 of the belt cords 7a arranged per ply width of 5 cm is not greater than 200, stiffness of the tread portion 2 is inhibited from being excessively enhanced, and ride comfort exhibited by the tire 1 during high-speed running can be enhanced. From such a viewpoint, the number n1 of the arranged the belt cords 7a is more preferably not greater than 190 and even more preferably not greater than 180.

In the belt ply 7A, 7B having such a structure, the density of the belt cord 7a in the tire axial direction is high, whereby holdability of the tread portion 2 can be enhanced, and durability of the tire 1 during high-speed running can be enhanced.

In the belt ply 7A, 7B, a product (d1×n1) of the diameter d1 (mm), in the tire radial direction, of the belt cord 7a and the number n1 (the number of the belt cords) of the belt cords 7a arranged per ply width of 5 cm is 38 to 60.

When the product (d1×n1) is not less than 38, holdability of the tread portion 2 is enhanced and durability of the tire 1 during high-speed running can be enhanced. From such a viewpoint, the product (d1×n1) is not less than 38 and preferably not less than 40.

When the product (d1×n1) is not greater than 60, vibration due to a small distance between the belt cords 7a is inhibited, and both durability of the tire 1 and ride comfort exhibited by the tire 1 during high-speed running can be achieved. From such a viewpoint, the product (d1×n1) is more preferably not greater than 57 and even more preferably not greater than 55.

The band cord 9a of the band ply 9A is, for example, formed of an organic fiber. Examples of the organic fiber of the band cord 9a include polyamide such as nylon 66, and polyester such as polyethylene terephthalate (PET). The diameter d2, in the tire radial direction a, of the band cord 9a is preferably 0.35 to 0.70 mm. The band cord 9a having such a structure enhances holdability of the tread portion 2 and can thus inhibit vibration during high-speed running, so that both durability of the tire 1 and ride comfort exhibited by the tire 1 during high-speed running can be achieved.

When the diameter d2, in the tire radial direction a, of the band cord 9a is not less than 0.35 mm, holdability of the tread portion 2 can be assuredly enhanced and durability of the tire 1 during high-speed running can be enhanced. From such a viewpoint, the diameter d2 of the band cord 9a is more preferably not less than 0.40 mm and even more preferably not less than 0.43 mm.

When the diameter d2, in the tire radial direction a, of the band cord 9a is not greater than 0.70 mm, the thickness of the tread portion 2 is inhibited from being increased, and ride comfort exhibited by the tire 1 during high-speed running can be enhanced. From such a viewpoint, the diameter d2 of the band cord 9a is more preferably not greater than 0.65 mm and even more preferably not greater than 0.60 mm.

In the band ply 9A, 35 to 65 band cords 9a are preferably arranged per ply width of 5 cm. The number n2 of the band cords 9a arranged per ply width of 5 cm represents the number of the band cords 9a arranged per ply width of 5 cm in the direction orthogonal to the longitudinal direction of the band cord 9a.

When the number n2 of the band cords 9a arranged per ply width of 5 cm is not less than 35, holdability of the tread portion 2 can be assuredly enhanced, and durability of the tire 1 during high-speed running can be enhanced. From such a viewpoint, the number n2 of the arranged band cords 9a is more preferably not less than 40 and even more preferably not less than 45.

When the number n2 of the band cords 9a arranged per ply width of 5 cm is not greater than 65, stiffness of the tread portion 2 is inhibited from being excessively enhanced, and ride comfort exhibited by the tire 1 during high-speed running can be enhanced. From such a viewpoint, the number n2 of the arranged band cords 9a is more preferably not greater than 60 and even more preferably not greater than 55.

In the band ply 9A, a product (d2×n2) of the diameter d2 (mm), in the tire radial direction a, of the band cord 9a and the number n2 (the number of the band cords) of the band cords 9a arranged per ply width of 5 cm is preferably 15 to 45. The product (d2×n2) represents a proportion of the band cord 9a in the width direction of the band ply 9A, and represents an index related to an interval between the adjacent band cords 9a.

When the product (d2×n2) is not less than 15, holdability of the tread portion 2 is enhanced and durability of the tire 1 during high-speed running can be enhanced. From such a viewpoint, the product (d2×n2) is more preferably not less than 18 and even more preferably not less than 20.

When the product (d2×n2) is not greater than 45, vibration due to a small distance between the band cords 9a is inhibited, and both durability of the tire 1 and ride comfort exhibited by the tire 1 during high-speed running can be achieved. From such a viewpoint, the product (d2×n2) is more preferably not greater than 42 and even more preferably not greater than 40.

The stress at 3% elongation of the band cord 9a is preferably 0.16 to 0.21 N/tex. When the stress at 3% elongation of the band cord 9a is not less than 0.16 N/tex, holdability of the tread portion 2 is enhanced and durability of the tire 1 during high-speed running can be enhanced. When the stress at 3% elongation of the band cord 9a is not greater than 0.21 N/tex, stiffness of the tread portion 2 is inhibited from being excessively enhanced, and ride comfort exhibited by the tire 1 during high-speed running can be enhanced.

The heat shrinkage stress of the band cord 9a at 180°C is preferably not less than 0.01 N/tex. When heat shrinkage stress of the band cord 9a is not less than 0.01 N/tex, a force for tightening the belt cord 7a can be enhanced, and both noise performance and durability of the tire 1 during high-speed running can be achieved.

The heat shrinkage stress of the band cord 9a is represented by a value obtained when the band cord 9a to be measured is fixed at a length of 25 cm under an initial load of 20 g/cord and the heat shrinkage stress is thereafter measured at a temperature of 180°C for two minutes according to the test method in ASTM D5591.

Although the particularly preferred embodiments of the present invention have been described above in detail, the present invention is not limited to the above-described embodiments, and various modifications can be made within the scope of the appended claims.

### Examples

Test tires having the basic structure shown in FIG. 1 were produced based on the specifications indicated in Table 1 and Table 2. For the produced test tires, durability and ride comfort during high-speed running were tested. Common specifications and test methods were as follows.

### <Common specifications>

Tire size: 205/55R16
Air pressure: 220 kPa
Structure of band cord: A nylon 66 1400 dtex/2
   B PET 1100 dtex/2

### <Ride comfort during high-speed running>

The produced test tires were mounted to all wheels of a front-wheel drive medium-size passenger car as a test vehicle. A test driver made sensory evaluation for ride comfort by five-point evaluation with 5 being the best score when the test vehicle was caused to run in a test course including straight, cornering, and zigzag paths at 100 km/h. The same test was performed by 20 test drivers, and the total point thereof was calculated. The result is indicated as an index with the total point in comparative example 1 being 100. The greater the value is, the more excellent ride comfort during high-speed running is.

### <Durability during high-speed running>

The produced test tire was mounted to a drum tester, and a speed was increased stepwise from 180 km/h in increments of 10 km/h under 5.88 N vertical load, and a time was measured until the tire was broken. The result is indicated as an index with the index of the comparative example 1 being 100. The greater the value is, the longer the time before the breakage is and the more excellent durability during high-speed running is.

The test results are indicated in Table 1 and Table 2.

**[Table 1]**

| | Comparative example 1 | Comparative example 2 | Comparative example 3 | Example 1 | Example 2 | Example 3 |
|---|---|---|---|---|---|---|
| Structure of belt cord | twisted cord | single cord | single cord | single cord | single cord | single cord |
| Diameter d1 (mm) of belt cord | 0.590 | 0.415 | 0.415 | 0.500 | 0.500 | 0.500 |
| The number n1 of belt cords arranged per ply width of 5 cm (the number of belt cords) | 100 | 46 | 46 | 110 | 110 | 60 |
| Product d1×n1 | 59 | 19 | 19 | 55 | 55 | 30 |
| Structure of band cord | A | A | B | A | A | A |
| Diameter d2 (mm) of band cord | 0.55 | 0.55 | 0.44 | 0.55 | 0.55 | 0.44 |
| The number n2 of band cords arranged per ply width of 5 cm (the number of band cords) | 49 | 49 | 49 | 49 | 49 | 49 |
| Product d2×n2 | 27 | 27 | 22 | 27 | 27 | 22 |
| Stress at 3% elongation (N/tex) of band cord | 0.075 | 0.075 | 0.150 | 0.075 | 0.075 | 0.075 |
| Heat shrinkage stress (N/tex) of band cord at 180°C | 0.023 | 0.023 | 0.007 | 0.023 | 0.023 | 0.023 |
| Gauge s (mm) | 0.40 | 0.40 | 0.40 | 0.12 | 0.25 | 0.12 |
| Value (dl+d2)/s | 2.850 | 2.413 | 2.138 | 8.8 | 4.2 | 7.8 |
| Ride comfort (index) | 100 | 98 | 105 | 107 | 109 | 115 |
| Durability (index) | 100 | 86 | 84 | 110 | 114 | 112 |
| Overall performance (Total) | 200 | 184 | 189 | 217 | 223 | 227 |

**[Table 2]**

| | Example 4 | Example 5 | Example 6 | Example 7 | Example 8 | Example 9 |
|---|---|---|---|---|---|---|
| Structure of belt cord | single cord | single cord | single cord | single cord | single cord | single cord |
| Diameter d1 (mm) of belt cord | 0.500 | 0.295 | 0.295 | 0.295 | 0.415 | 0.415 |
| The number n1 of belt cords arranged per ply width of 5 cm (the number of belt cords) | 60 | 92 | 92 | 92 | 110 | 92 |
| Product d1×n1 | 30 | 27 | 27 | 27 | 46 | 38 |
| Structure of band cord | A | B | B | B | A | B |
| Diameter d2 (mm) of band cord | 0.44 | 0.44 | 0.44 | 0.44 | 0.55 | 0.44 |
| The number n2 of band cords arranged per ply width of 5 cm (the number of band cords) | 49 | 45 | 45 | 45 | 49 | 45 |
| Product d2×n2 | 22 | 20 | 20 | 20 | 27 | 20 |
| Stress at 3% elongation (N/tex) of band cord | 0.075 | 0.150 | 0.150 | 0.180 | 0.075 | 0.180 |
| Heat shrinkage stress (N/tex) of band cord at 180°C | 0.023 | 0.007 | 0.007 | 0.018 | 0.023 | 0.018 |
| Gauge s (mm) | 0.23 | 0.12 | 0.18 | 0.12 | 0.12 | 0.12 |
| Value (dl+d2)/s | 4.1 | 6.1 | 4.1 | 6.1 | 8.0 | 7.1 |
| Ride comfort (index) | 120 | 134 | 136 | 137 | 145 | 141 |
| Durability (index) | 108 | 106 | 104 | 114 | 112 | 120 |
| Overall performance (total) | 228 | 240 | 240 | 251 | 257 | 261 |

According to the test results, as compared with the comparative examples, the tires of the examples exhibited excellent durability and ride comfort during high-speed running and the overall performance evaluated as the total of values of the respective performances was superior. Therefore, achievement of both durability and ride comfort during high-speed running was confirmed.

## Claims

1. A tire (1) comprising:
a belt layer (7); and
a band layer (9), wherein
the belt layer (7) includes at least one belt ply (7B),
the belt ply (7B) includes a belt cord (7a) formed of a single steel cord,
the band layer (9) includes at least one band ply (9A),
the band ply (9A) includes a band cord (9a) disposed at an angle of not greater than 5° relative to a tire circumferential direction,
a gauge (s) representing a distance in a tire radial direction (a) between a surface of the belt cord (7a) of the belt ply (7B) and a surface, of the band cord (9a) of the band ply (9A), adjacent to the surface of the belt cord (7a) in the tire radial direction (a), is 0.1 to 0.3 mm,
**characterized in that**
a value ((d1+d2)/s) obtained by dividing a sum (d1+d2) of a diameter (d1) in mm, in the tire radial direction (a), of the belt cord (7a) and a diameter (d2) in mm,
in the tire radial direction (a), of the band cord (9a) by the gauge (s) in mm is 4.0 to 13.0, and
in the belt ply (7B), a product (d1×n1) of the diameter (d1) in mm,
in the tire radial direction (a), of the belt cord (7a) and the number (n1) of the belt cords (7a) arranged per ply width of 5 cm is 38 to 60.

2. The tire (1) according to claim 1, wherein the number (n1) of the belt cords (7a) arranged per ply width of 5 cm in the belt ply (7B) is 50 to 200.

3. The tire (1) according to claim 1 or 2, wherein the diameter (d1), in the tire radial direction (a), of the belt cord (7a) is 0.16 to 0.42 mm.

4. The tire (1) according to any one of claims 1 to 3, wherein the number (n2) of the band cords (9a) arranged per ply width of 5 cm in the band ply (9A) is 35 to 65.

5. The tire (1) according to any one of claims 1 to 4, wherein the diameter (d2), in the tire radial direction (a), of the band cord (9a) is 0.35 to 0.70 mm.

6. The tire (1) according to any one of claims 1 to 5, wherein, in the band ply (9A), a product (d2×n2) of the diameter (d2) (mm), in the tire radial direction (a), of the band cord (9a) and the number (n2) (the number of the band cords) of the band cords (9a) arranged per ply width of 5 cm is 15 to 45.

7. The tire (1) according to any one of claims 1 to 6, wherein a stress at 3% elongation of the band cord (9a) is 0.16 to 0.21 N/tex.

8. The tire (1) according to any one of claims 1 to 7, wherein a heat shrinkage stress of the band cord (9a) at 180°C is not less than 0.01 N/tex.

## Patentansprüche

1. Reifen (1), umfassend:
eine Gürtelschicht (7); und
eine Bandschicht (9), wobei
die Gürtelschicht (7) mindestens eine Gürtellage (7B) umfasst,
die Gürtellage (7B) einen Gürtelkord (7a) umfasst, der aus einem einzelnen Stahlkord gebildet ist,
die Bandschicht (9) mindestens eine Bandlage (9A) umfasst,
die Bandlage (9A) einen Bandkord (9a) umfasst, der in einem Winkel von nicht mehr als 5° relativ zu einer Reifenumfangsrichtung angeordnet ist,
ein Maß (s), das einen Abstand in einer Reifenradialrichtung (a) zwischen einer Oberfläche des Gürtelkords (7a) der Gürtellage (7B) und einer Oberfläche des Bandkords (9a) der Bandlage (9A) darstellt, die der Oberfläche des Gürtelkords (7a) in der Reifenradialrichtung (a) benachbart ist, 0,1 bis 0,3 mm beträgt,
**dadurch gekennzeichnet, dass**
ein Wert ((d1+d2)/s), der durch Dividieren einer Summe (d1+d2) eines Durchmessers (d1) in mm in der Reifenradialrichtung (a) des Gürtelkords (7a) und eines Durchmessers (d2) in mm in der Reifenradialrichtung (a) des Bandkords (9a) durch das Maß (s) in mm erhalten wird, 4,0 bis 13,0 beträgt, und
in der Gürtellage (7B) ein Produkt (d1×n1) des Durchmessers (d1) in mm in der Reifenradialrichtung (a) des Gürtelkords (7a) und der Anzahl (n1) der Gürtelkorde (7a), die pro Lagenbreite von 5 cm angeordnet sind, 38 bis 60 beträgt.

2. Reifen (1) nach Anspruch 1, wobei die Anzahl (n1) der Gürtelkorde (7a), die pro Lagenbreite von 5 cm in der Gürtellage (7B) angeordnet sind, 50 bis 200 beträgt.

3. Reifen (1) nach Anspruch 1 oder 2, wobei der Durchmesser (d1) in der Reifenradialrichtung (a) des Gürtelkords (7a) 0,16 bis 0,42 mm beträgt.

4. Reifen (1) nach einem der Ansprüche 1 bis 3, wobei die Anzahl (n2) der Bandkorde (9a), die pro Lagenbreite von 5 cm in der Bandlage (9A) angeordnet sind, 35 bis 65 beträgt.

5. Reifen (1) nach einem der Ansprüche 1 bis 4, wobei der Durchmesser (d2) in der Reifenradialrichtung (a) des Bandkords (9a) 0,35 bis 0,70 mm beträgt.

6. Reifen (1) nach einem der Ansprüche 1 bis 5, wobei in der Bandlage (9A) ein Produkt (d2×n2) des Durchmessers (d2) (mm) in der Reifenradialrichtung (a) des Bandkords (9a) und der Anzahl (n2) (der Anzahl der Bandkorde) der Bandkorde (9a), die pro Lagenbreite von 5 cm angeordnet sind, 15 bis 45 beträgt.

7. Reifen (1) nach einem der Ansprüche 1 bis 6, wobei eine Spannung bei 3% Dehnung des Bandkords (9a) 0,16 bis 0,21 N/tex beträgt.

8. Reifen (1) nach einem der Ansprüche 1 bis 7, wobei eine Wärmeschrumpfspannung des Bandkords (9a) bei 180°C nicht weniger als 0,01 N/tex beträgt.

## Revendications

1. Pneumatique (1) comprenant :
une couche de ceinture (7) ; et
une couche de bande (9), dans lequel
la couche de ceinture (7) inclut au moins une nappe de ceinture (7B),
la nappe de ceinture (7B) inclut un câblé de ceinture (7a) formé d'un câblé simple en acier,
la couche de bande (9) inclut au moins une nappe de bande (9A),
la nappe de bande (9A) inclut un câblé de bande (9a) disposé sous un angle qui n'est pas supérieur à 5° relativement à une direction circonférentielle du pneumatique,
un gabarit (s) représentant une distance dans une direction radiale du pneumatique (a) entre une surface du câblé de ceinture (7a) de la nappe de ceinture (7B) et une surface du câblé de bande (9a) de la nappe de bande (9A), adjacente à la surface du câblé de ceinture (7a) dans la direction radiale du pneumatique (a), est de 0,1 à 0,3 mm,
**caractérisé en ce que**
une valeur ((d1+d2)/s) obtenue en divisant une somme (d1+d2) d'un diamètre (d1) en mm, dans la direction radiale du pneumatique (a), du câblé de ceinture (7a) et d'un diamètre (d2) en mm, dans la direction radiale du pneumatique (a), du câblé de bande (9a) par le gabarit (s) en mm est de 4,0 à 13,0, et
dans la nappe de ceinture (7B), un produit (d1×n1) du diamètre (d1) en mm,
dans la direction radiale du pneumatique (a), du câblé de ceinture (7a) et du nombre (n1) de câblés de ceinture (7a) agencés par largeur de nappe de 5 cm est de 38 à 60.

2. Pneumatique (1) selon la revendication 1, dans lequel le nombre (n1) de câblés de ceinture (7a) agencés par largeur de nappe de 5 cm dans la nappe de ceinture (7B) est de 50 à 200.

3. Pneumatique (1) selon la revendication 1 ou 2, dans lequel le diamètre (d1), dans la direction radiale du pneumatique (a), des câblés de ceinture (7a) est de 0,16 à 0,42 mm.

4. Pneumatique (1) selon l'une quelconque des revendications 1 à 3, dans lequel le nombre (n2) de câblés de bande (9a) agencés par largeur de nappe de 5 cm dans la nappe de bande (9A) est de 35 à 65.

5. Pneumatique (1) selon l'une quelconque des revendications 1 à 4, dans lequel le diamètre (d2), dans la direction radiale du pneumatique (a), du câblé de bande (9a) est de 0,35 à 0,70 mm.

6. Pneumatique (1) selon l'une quelconque des revendications 1 à 5, dans lequel, dans la nappe de bande (9 A), un produit (d2×n2) du diamètre (d2) (mm), dans la direction radiale du pneumatique (a), du câblé de bande (9a) et du nombre (n2) (le nombre de câblés de bande) de câblés de bande (9a) agencés par largeur de nappe de 5 cm est de 15 à 45.

7. Pneumatique (1) selon l'une quelconque des revendications 1 à 6, dans lequel une contrainte à 3 % d'allongement du câblé de bande (9a) est de 0,16 à 0,21 N/tex.

8. Pneumatique (1) selon l'une quelconque des revendications 1 à 7, dans lequel une contrainte de rétraction thermique du câblé de bande (9a) à 180 °C n'est pas inférieure à 0,01 N/tex.
